# EUROPEAN PATENT APPLICATION

(11) **EP 4 806 711 A1**
(43) Date of publication of application: **16.09.2026**
(21) Application number: 24887402.6
(22) Date of filing: 19.06.2024
(51) Int. Cl.: B60L 15/20

(54) **DRIVING AXLE CONTROL METHOD, CONTROLLER, ASSEMBLY, VEHICLE, AND STORAGE MEDIUM**

(30) Priority: 09.11.2023 CN 202311494571
(71) Applicant: BYD Company Limited, Shenzhen, Guangdong 518118 (CN)
(72) Inventor: WANG, Chuanhao, Shenzhen, Guangdong 518118 (CN); XU, Boliang, Shenzhen, Guangdong 518118 (CN); LV, Gaofeng, Shenzhen, Guangdong 518118 (CN); WANG, Jiquan, Shenzhen, Guangdong 518118 (CN); YUAN, Chan, Shenzhen, Guangdong 518118 (CN)
(74) Representative: Mathys & Squire
(86) International application number: PCT/CN2024/100123
(87) International publication number: WO 2025/097778

(57) **Abstract**

A vehicle is provided, where the vehicle has an assembly, a controller, and a storage medium. The assembly includes a drive axle, the drive axle includes a gear shift apparatus and a differential lock, and the gear shift apparatus includes at least two gears. The controller is configured to perform a method for controlling a drive axle. The method for controlling a drive axle includes: obtaining a current driving mode of the vehicle **(S110);** and determining target gear information of the gear shift apparatus and target state information of the differential lock based on the current driving mode (S120), where different driving modes correspond to different gear information and different state information.

## Description

### CROSS-REFERENCE TO RELATED APPLICATIONS

This application claims priority to Chinese Patent Application No. 202311494571.0, filed on November 9, 2023, and entitled "METHOD FOR CONTROLLING DRIVE AXLE, AND CONTROLLER, ASSEMBLY, VEHICLE, AND STORAGE MEDIUM", which is incorporated in this specification by reference in its entirety.

### TECHNICAL FIELD

This application relates to the field of vehicle technologies, and more specifically, to a method for controlling a drive axle, and a vehicle controller, a first drive axle assembly, a four-wheel drive powertrain, a vehicle, and a computer-readable storage medium.

### BACKGROUND

A drive axle is a key component of new energy vehicles. However, control intelligence of related drive axles is low.

### SUMMARY

An objective of this application is to provide a new technical solution for controlling a drive axle.

According to a first aspect of this application, a method for controlling a drive axle is provided, wherein the drive axle includes a gear shift apparatus and a differential lock, the gear shift apparatus includes at least two gears, and the method includes:
obtaining a current driving mode of a vehicle; and
determining target gear information of the gear shift apparatus and target state information of the differential lock based on the current driving mode, wherein different driving modes correspond to different gear information and different state information.

Optionally, after a step of determining the target gear information of the gear shift apparatus and the target state information of the differential lock based on the current driving mode, the method further includes:
controlling the gear shift apparatus based on the target gear information; and
controlling the differential lock based on the target state information.

Optionally, a step of controlling the gear shift apparatus based on the target gear information includes:
when obtained gear shift evaluation information meets a gear shift condition, controlling a gear of the gear shift apparatus to be shifted to a gear corresponding to the target gear information.

Optionally, a step in which the obtained gear shift evaluation information meets the gear shift condition includes:
when current gear information is different from the target gear information, first apparatus fault information indicates that the gear shift apparatus is not faulty, and current vehicle speed information is less than or equal to a first vehicle speed threshold corresponding to the target gear information, determining that the gear shift evaluation information meets the gear shift condition, wherein the gear shift evaluation information includes the current gear information, the first apparatus fault information, and the current vehicle speed information.

Optionally, a step of controlling the differential lock based on the target state information includes:
when obtained state evaluation information meets a state switching condition, controlling a state of the differential lock to be switched to a state corresponding to the target state information.

Optionally, a step in which the obtained gear shift evaluation information meets the gear shift condition includes:
when current state information is different from the target state information, second apparatus fault information indicates that the differential lock is not faulty, the current vehicle speed information is less than or equal to a second vehicle speed threshold corresponding to locked state information of the differential lock, and current wheel speed difference information of two wheels connected to the drive axle is less than or equal to a wheel speed difference threshold corresponding to the locked state information of the differential lock, determining that the state evaluation information meets the state switching condition, wherein the state evaluation information includes the current state information, the second apparatus fault information, the current vehicle speed information, and the current wheel speed difference information.

Optionally, the method further includes:
when receiving gear shift information that is input by a user, controlling the gear shift apparatus based on the gear shift information.

Optionally, a step of controlling the gear shift apparatus based on the gear shift information includes:
when the obtained gear shift evaluation information meets the gear shift condition, controlling the gear of the gear shift apparatus to be shifted to a gear corresponding to the gear shift information; and
the method further includes:
   outputting first reminder information when the obtained gear shift evaluation information does not meet the gear shift condition.

Optionally, the method further includes:
when receiving state switching information that is input by the user, controlling the differential lock based on the state switching information.

Optionally, a step of controlling the differential lock based on the state switching information includes:
when the obtained state evaluation information meets the state switching condition, controlling the state of the differential lock to be switched to a state corresponding to the state switching information; and
the method further includes:
   outputting second reminder information when the obtained state evaluation information does not meet the state switching condition.

According to a second aspect of this application, a vehicle controller is provided, including a memory and a processor, wherein the memory is configured to store computer instructions, and the processor is configured to invoke the computer instructions from the memory, to perform the method for controlling a drive axle according to any one of the first aspect.

According to a third aspect of this application, a first drive axle assembly is provided, including a drive axle and the vehicle controller according to the second aspect. The drive axle includes a gear shift apparatus and a differential lock, and the vehicle controller controls the gear shift apparatus and the differential lock.

According to a fourth aspect of this application, a four-wheel drive powertrain is provided, including the first drive axle assembly according to the third aspect and a second drive axle assembly.

When a vehicle is in a target driving mode, a gear shift apparatus of the first drive axle assembly is in a neutral state, and the second drive axle assembly is in a driving state.

According to a fifth aspect of this application, a vehicle is provided, wherein the vehicle includes the vehicle controller according to the second aspect;
the vehicle includes the first drive axle assembly according to the third aspect; or
the vehicle includes the four-wheel drive powertrain according to the fourth aspect.

According to a sixth aspect of this application, a computer-readable storage medium is provided, wherein the computer-readable storage medium stores a computer program, and when the computer program is executed by a processor, the control method for a rear axle power system of a vehicle according to any one of the first aspect is implemented.

An embodiment of this application provides a method for controlling a drive axle. The drive axle includes a gear shift apparatus and a differential lock, and the gear shift apparatus includes at least two gears. The method includes: obtaining a current driving mode of a vehicle; and determining target gear information of the gear shift apparatus and target state information of the differential lock based on the current driving mode, wherein different driving modes correspond to different gear information and different state information. Based on the method, matching target gear information of a shifter and matching target state information of the differential lock may be intelligently determined based on the current driving mode of the vehicle. This improves intelligence of controlling the drive axle.

Other features and advantages of this application may become clear from the following detailed descriptions of example embodiments of this application with reference to the accompanying drawings.

### BRIEF DESCRIPTION OF DRAWINGS

The accompanying drawings that are incorporated into this specification and constitute a part of the specification show embodiments of this application, and are used together with this specification to explain a principle of this application.
FIG. 1 is a diagram of a structure of a vehicle according to an embodiment of this application;
FIG. 2 is a schematic flowchart of a method for controlling a drive axle according to an embodiment of this application; and
FIG. 3 is a diagram of a structure of a vehicle controller according to an embodiment of this application.

### DESCRIPTION OF EMBODIMENTS

Example embodiments of this application are described in detail with reference to the accompanying drawings. It will be noted that relative arrangement of components and steps, numerical expressions, and values described in these embodiments do not limit the scope of this application, unless specifically noted otherwise.

The following descriptions of at least one example embodiment are merely illustrative actually and are not intended to limit this application and usage or application thereof.

Technologies, methods, and devices that are known to a person of ordinary skill in related fields may not be discussed in detail, but in proper cases, the technologies, methods, and devices will be considered as a part of this specification.

In all examples shown and discussed herein, any specific value will be construed merely as an example but not a limitation. Therefore, another example of the example embodiments may have a different value.

It will be noted that similar reference numerals and letters in the following accompanying drawings indicate similar items. Therefore, once a specific item is defined in one accompanying drawing, the item does not need to be further discussed in a subsequent accompanying drawing.

### <Method embodiment>

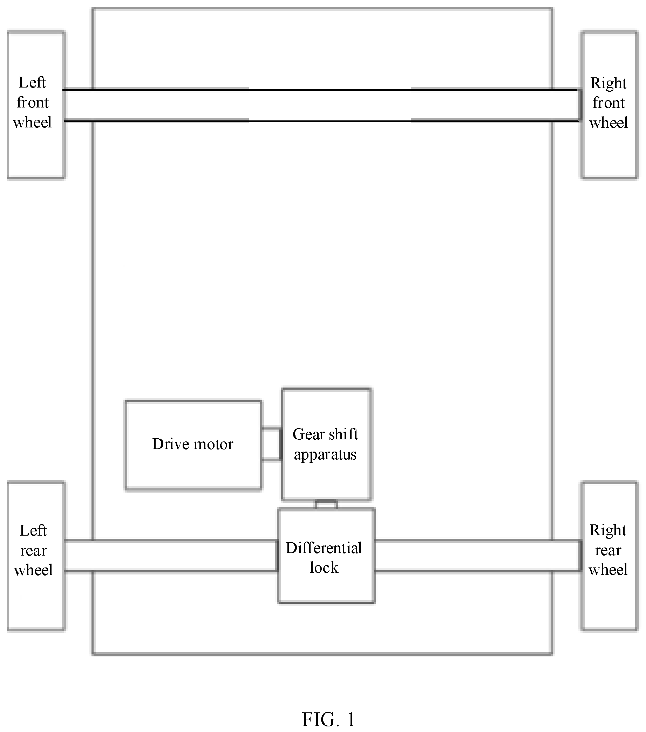

An embodiment of this application provides a method for controlling a drive axle. The drive axle includes a gear shift apparatus and a differential lock, and the gear shift apparatus includes at least two gears. In addition, as shown in FIG. 1, the drive axle usually further includes a drive motor, the drive motor is connected to the gear shift apparatus, the gear shift apparatus is connected to a transmission axle, the transmission axle is connected to the differential lock, the differential lock is connected to two half axles of a rear wheel, and one of the half axles is connected to one wheel.

In this embodiment of this application, the drive axle may be a front drive axle or a rear drive axle of a vehicle. In FIG. 1, an example in which the drive axle is specifically a rear drive axle is used for illustration. In addition, the gear shift apparatus may be specifically an electronic shifter, and the differential lock may be specifically an electronic differential lock. The vehicle is a new energy vehicle, for example, a pure electric vehicle, a fuel-electric hybrid vehicle, and a gas-electric hybrid vehicle. In addition, as shown in FIG. 1, the vehicle further includes a front left wheel, a front right wheel, a rear left wheel, and a rear right wheel.

The method for controlling a drive axle provided in this embodiment of this application may be performed by a vehicle control unit (VCU). The following uses an example in which an execution body is the vehicle control unit for illustration.

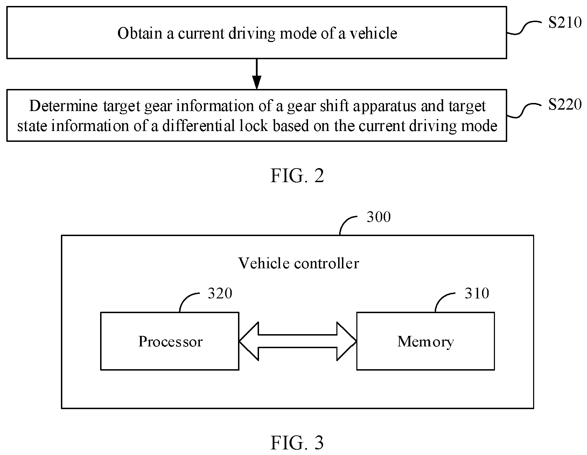

As shown in FIG. 2, the method for controlling a drive axle provided in this embodiment of this application includes the following step S110 and step S120.

Step S110: obtain a current driving mode of the vehicle.

In an embodiment of this application, the driving mode of the vehicle may include an economical paved road mode, a normal paved road mode, and an extreme off-road mode. Of course, the driving mode of the vehicle may further include a mode for another type of road surface, for example, a snow-road mode, a mud-road mode, and a sand-road mode. This is not limited in this application.

In an embodiment of this application, a driver inputs, on a central display screen, driving mode indication information that meets a requirement of the driver. The VCU responds to the indication information that is input last time by the driver, to determine the current driving mode of the vehicle. Of course, the VCU may alternatively obtain the current driving mode of the vehicle in another method. This is not limited in this application.

Step S120: determine target gear information of the gear shift apparatus and target state information of the differential lock based on the current driving mode.

Different driving modes correspond to different gear information and different state information.

In this embodiment of this application, there is a correspondence between the driving mode, the gear information of the gear shift apparatus, and the state information of the differential lock. The VCU searches, from the correspondence, for gear information and state information corresponding to a driving mode that is the same as or closest to the current driving mode, and uses the found gear information as the target gear information, and uses the found state information as the target state information.

In an example, an example in which the driving mode specifically includes the economical paved road mode, the normal paved road mode, and the extreme off-road mode, and the gear shift apparatus includes a high gear and a low gear is used. The correspondence between the driving mode, the gear information of the gear shift apparatus, and the state information of the differential lock may be shown in Table 1 below.

**Table 1**

| Driving mode | Gear information of a gear shift apparatus | State information of a differential lock |
|---|---|---|
| Economical paved road mode | Neutral gear | Unlocked state |
| Normal paved road mode | High gear | Unlocked state |
| Extreme off-road mode | Low gear | Locked state |

For Table 1, when the current driving mode is the economical paved road mode, the target gear information of the gear shift apparatus is the neutral gear, and the state information of the differential lock is the unlocked state. In this case, for a vehicle with a four-wheel drive powertrain, when the gear shift apparatus is at a neutral gear, that is, the drive axle in this embodiment of this application does not operate, the vehicle may travel by using another drive system. Based on this, the overall energy consumption of the vehicle can be reduced.

When the current driving mode is the normal paved road mode, it is determined that the target gear information of the gear shift apparatus is the high gear and the state information of the differential lock is the unlocked state. In this way, the vehicle can ensure a power requirement for traveling.

When the current driving mode is the extreme off-road mode, it is determined that the target gear information of the gear shift apparatus is the low gear and the target state information of the differential lock is the locked state. In this way, the vehicle meets an off-road working condition of low speed and large torque requirement, and off-road performance of the vehicle can be improved.

In conclusion, this embodiment of this application provides the method for controlling a drive axle. The drive axle includes the gear shift apparatus and the differential lock, and the gear shift apparatus includes at least two gears. The method includes: obtaining the current driving mode of the vehicle; and determining the target gear information of the gear shift apparatus and the target state information of the differential lock based on the current driving mode, wherein different driving modes correspond to different gear information and different state information. Based on the method, matching target gear information of a shifter and matching target state information of the differential lock may be intelligently determined based on the current driving mode of the vehicle. This improves intelligence of controlling the drive axle.

In an embodiment of this application, after step S120, the method for controlling a drive axle provided in this embodiment of this application further includes the following step S130 and step S140.

Step S130: control the gear shift apparatus based on the target gear information.

In this embodiment of this application, step S130 is specifically implemented as controlling a gear of the gear shift apparatus to be a gear corresponding to the target gear information. For example, when the target gear information is the high gear, the gear of the gear shift apparatus is controlled to be a high gear.

Step S140: control the differential lock based on the target state information.

In this embodiment of this application, step S140 is specifically implemented as controlling a state of the differential lock to be a state corresponding to the target state information. For example, when the target state information is the unlocked state, the state of the differential lock is controlled to be an unlocked state.

It will be noted that a sequence between step S130 and step S140 is not limited.

The gear shift apparatus and the differential lock can be intelligently controlled through step S130 and step S140.

In an embodiment of this application, step S130 may be specifically implemented through the following step S131.

Step S131: when obtained gear shift evaluation information meets a gear shift condition, control the gear of the gear shift apparatus to be shifted to the gear corresponding to the target gear information.

In this embodiment of this application, before the gear of the gear shift apparatus is controlled to be the gear corresponding to the target gear information, whether the obtained gear shift evaluation information meets the gear shift condition is first determined. When the obtained gear shift evaluation information meets the gear shift condition, a step of controlling the gear of the gear shift apparatus to be shifted to the gear corresponding to the target gear information is performed. In this way, effective gear shifting of the gear shift apparatus can be ensured.

Corresponding to step S131, if the obtained gear shift evaluation information does not meet the gear shift condition, a current gear of the gear shift apparatus and a current state of the differential lock are maintained.

In an embodiment of this application, a step in which the obtained gear shift evaluation information meets the gear shift condition in step S131 may be specifically implemented through the following step S1311.

Step S1311: when current gear information is different from the target gear information, first apparatus fault information indicates that the gear shift apparatus is not faulty, and current vehicle speed information is less than or equal to a first vehicle speed threshold corresponding to the target gear information, determine that the gear shift evaluation information meets the gear shift condition.

The gear shift evaluation information includes the current gear information, the first apparatus fault information, and the current vehicle speed information.

In this embodiment of this application, the first apparatus fault information indicates one of the following: the gear shift apparatus is not faulty or the gear shift apparatus is faulty.

Different gears of the gear shift apparatus correspond to different vehicle speed thresholds. The vehicle speed threshold is an allowed maximum vehicle speed at a corresponding gear. In this embodiment of this application, a vehicle speed threshold corresponding to the gear corresponding to the target gear information is denoted as the first vehicle speed threshold.

In an embodiment of this application, the gear shift evaluation information may be obtained through CAN communication. Certainly, the gear shift evaluation information may alternatively be obtained in another method. This is not limited in this application.

In this embodiment of this application, when the current gear information is different from the target gear information, the first apparatus fault information indicates that the gear shift apparatus is not faulty, and the current vehicle speed information is less than or equal to the first vehicle speed threshold corresponding to the target gear information, it indicates that the gear of the gear shift apparatus can be effectively shifted. In this case, it is determined that the gear shift evaluation information meets the gear shift condition.

Corresponding to step S1311, when any one of the following cases is not met: the current gear information is different from the target gear information, the first apparatus fault information indicates that the gear shift apparatus is not faulty, and the current vehicle speed information is less than or equal to the first vehicle speed threshold corresponding to the target gear information, it indicates that the gear of the gear shift apparatus cannot be effectively shifted. In this case, it is determined that the gear shift evaluation information does not meet the gear shift condition.

In this embodiment, the gear shift condition is evaluated based on the current gear information, the first apparatus fault information, and the current vehicle speed information. A combined evaluation of three types of data improves gear shift evaluation accuracy, and further improves intelligence and accuracy of intelligent gear shifting.

In an embodiment of this application, step S140 may be specifically implemented through the following step S141.

Step S141: when obtained state evaluation information meets a state switching condition, control the state of the differential lock to be switched to the state corresponding to the target state information.

In this embodiment of this application, before the state of the differential lock is controlled to be switched to the state corresponding to the target state information, whether the obtained state evaluation information meets the state switching condition is first determined. When the obtained state evaluation information meets the state switching condition, a step of controlling the state of the differential lock to be switched to the state corresponding to the target state information is performed. In this way, effective state shifting of the differential lock can be ensured.

Corresponding to step S141, if the obtained state evaluation information does not meet the state switching condition, the process ends.

In an embodiment of this application, a step in which the obtained gear shift evaluation information meets the state switching condition in step S141 may be specifically implemented through the following step S1411.

Step S1411: when current state information is different from the target state information, second apparatus fault information indicates that the differential lock is not faulty, the current vehicle speed information is less than or equal to a second vehicle speed threshold corresponding to locked state information of the differential lock, and current wheel speed difference information of two wheels connected to the drive axle is less than or equal to a wheel speed difference threshold corresponding to the locked state information of the differential lock, determine that the state evaluation information meets the state switching condition.

The state evaluation information includes the current state information, the second apparatus fault information, the current vehicle speed information, and the current wheel speed difference information.

In this embodiment of this application, the second apparatus fault information indicates one of the following: the differential lock is not faulty or the differential lock is faulty.

The differential lock in the locked state corresponds to a vehicle speed threshold. The vehicle speed threshold is an allowed maximum vehicle speed in the locked state of the differential lock. In this embodiment of this application, the corresponding vehicle speed threshold in the locked state of the differential lock is denoted as the second vehicle speed threshold.

In addition, the differential lock in the locked state corresponds to a wheel speed difference threshold. The wheel speed difference threshold is an allowed maximum wheel speed difference in the locked state of the differential lock.

In an embodiment of this application, the state evaluation information may be obtained through CAN communication. Certainly, the state evaluation information may alternatively be obtained in another method. This is not limited in this application.

In this embodiment of this application, when the current state information is different from the target state information, the second apparatus fault information indicates that the differential lock is not faulty, the current vehicle speed information is less than or equal to the second vehicle speed threshold corresponding to the locked state information of the differential lock, and the current wheel speed difference information of the two wheels connected to the drive axle is less than or equal to the wheel speed difference threshold corresponding to the locked state information of the differential lock, it indicates that the state of the differential lock can be effectively switched. In this case, it is determined that the state evaluation information meets the state switching condition.

Corresponding to step S1411, when any one of the following cases is not met: the current state information is different from the target state information, the second apparatus fault information indicates that the differential lock is not faulty, the current vehicle speed information is less than or equal to the second vehicle speed threshold corresponding to the locked state information of the differential lock, and the current wheel speed difference information of the two wheels connected to the drive axle is less than or equal to the wheel speed difference threshold corresponding to the locked state information of the differential lock, it indicates that the state of the differential lock cannot be effectively switched. In this case, it is determined that the state evaluation information does not meet the state switching condition.

In this embodiment, the state switching condition is evaluated based on the current state information, the second apparatus fault information, the current vehicle speed information, and the current wheel speed difference information. A combined evaluation of four types of data improves state evaluation accuracy, and further improves the intelligence and accuracy of state switching.

In an embodiment of this application, there is a problem that the driver is not satisfied with the target gear information determined based on step S120. To resolve this problem, the method for controlling a drive axle provided in this embodiment of this application further includes the following step S150.

Step S150: when receiving gear shift information that is input by a user, control the gear shift apparatus based on the gear shift information.

In this embodiment of this application, if the driver is not satisfied with the gear corresponding to the target gear information, the driver may input the gear shift information to the vehicle, to shift the gear corresponding to the target gear information, and specifically, shift the gear corresponding to the target gear information to a gear indicated by the gear shift information. In this way, the gear of the gear shift apparatus can be a gear with which the driver is satisfied, thereby meeting a personalized requirement of the driver.

In an embodiment of this application, the target gear information is displayed on the central display screen of the vehicle, so that the driver determines whether the target gear information meets a requirement of the driver.

In addition, a switch for the driver to input the gear shift information is provided in the vehicle, so that the driver can trigger the switch to input the gear shift information.

Further, to avoid ineffective gear shifting of the shifter during input of the gear shift information, step S150 is specifically implemented through the following step S151.

Step S151: when the obtained gear shift evaluation information meets the gear shift condition, control the gear of the gear shift apparatus to be shifted to a gear corresponding to the gear shift information.

In this embodiment of this application, before a gear of the shifter is shifted to be the gear corresponding to the gear shift information, whether the obtained gear shift evaluation information meets the gear shift condition is first determined. When the obtained gear shift evaluation information meets the gear shift condition, a step of controlling the gear of the gear shift apparatus to be shifted to the gear corresponding to the gear shift information is performed. In this way, effective gear shifting can be performed on the gear shift apparatus.

It will be noted that, for details about implementation in which the obtained gear shift evaluation information meets the gear shift condition in step S151, reference may be made to step S1311. Details are not described herein again.

Corresponding to step S151, the method for controlling a drive axle provided in this embodiment of this application further includes the following step S152.

Step S152: output first reminder information when the obtained gear shift evaluation information does not meet the gear shift condition.

In this embodiment of this application, when the obtained gear shift evaluation information does not meet the gear shift condition, the first reminder information is output, to remind the driver that the gear shift apparatus cannot be shifted to the gear indicated by the gear shift information.

In an embodiment of this application, there is a problem that the driver is not satisfied with the target state information determined based on step S120. To resolve this problem, the method for controlling a drive axle provided in this embodiment of this application further includes the following step S160.

Step S160: when receiving state switching information that is input by the user, control the differential lock based on the state switching information.

In this embodiment of this application, if the driver is not satisfied with the state corresponding to the target state information, the driver may input the state switching information to the vehicle, to switch the state corresponding to the target state information, and specifically, switch the state corresponding to the target state information to a state indicated by the state switching information. In this way, the state of the differential lock can be a state with which the driver is satisfied, thereby meeting the personalized requirement of the driver.

In an embodiment of this application, the target state information is displayed on the central display screen of the vehicle, so that the driver determines whether the target state information meets the requirement of the driver.

In addition, a switch for the driver to input the state switching information is provided in the vehicle, so that the driver can trigger the switch to input the state switching information.

Further, to avoid ineffective state switching of the state of the differential lock during input of the state switching information, step S160 is specifically implemented through the following step S161.

Step S161: when the obtained state evaluation information meets the state switching condition, control the state of the differential lock to be switched to a state corresponding to the state switching information.

In this embodiment of this application, before the state of the differential lock is switched to the state corresponding to the state switching information, whether the obtained state evaluation information meets the state switching condition is first determined. When the obtained state evaluation information meets the state switching condition, a step of controlling the state of the differential lock to be switched to the state corresponding to the state switching information. In this way, effective state switching can be performed on the differential lock.

It will be noted that, for details about implementation in which the obtained gear shift evaluation information meets the gear shift condition in step S161, reference may be made to step S1411. Details are not described herein again.

Corresponding to step S161, the method for controlling a drive axle provided in this embodiment of this application further includes the following step S162.

Step S162: output second reminder information when the obtained state evaluation information does not meet the state switching condition.

In this embodiment of this application, when the obtained state evaluation information does not meet the state switching condition, the second reminder information is output, to remind the driver that the differential lock cannot be switched to the state indicated by the state switching information.

### <Vehicle controller embodiment>

An embodiment of this application further provides a vehicle controller 300. As shown in FIG. 3, a memory 310 and a processor 320 are included. The memory 310 is configured to store computer instructions, and the processor 320 is configured to invoke the computer instructions from the memory 310, to perform the method for controlling a drive axle provided in any one of the foregoing method embodiments.

### <Assembly embodiment 1>

An embodiment of this application further provides a first drive axle assembly, including a drive axle and the vehicle controller provided in the vehicle controller embodiment. The drive axle includes a gear shift apparatus and a differential lock, and the vehicle controller controls the gear shift apparatus and the differential lock.

### <Assembly embodiment 2>

An embodiment of this application further provides a four-wheel drive powertrain, including the first drive axle assembly provided in the assembly embodiment 1 and a second drive axle assembly.

When a vehicle is in a target driving mode, a gear shift apparatus of the first drive axle assembly is in a neutral state, and the second drive axle assembly is in a driving state.

In this embodiment of this application, the target driving mode is a driving mode in which a drive axle corresponding to the method for controlling a drive axle provided in embodiments of this application does not operate. In this case, the vehicle switches from four-wheel drive to two-wheel drive, so that overall energy consumption of the vehicle can be reduced.

In an example, with reference to Table 1, the target driving mode is an economical paved road mode.

### <Vehicle embodiment>

An embodiment of this application further provides a vehicle. The vehicle includes the vehicle controller provided in the vehicle controller embodiment.

Alternatively, the vehicle includes the first drive axle assembly provided in the assembly embodiment 1.

Alternatively, the vehicle includes the four-wheel drive powertrain provided in the assembly embodiment 2.

### <Storage medium embodiment>

An embodiment of this application further provides a computer-readable storage medium. The computer-readable storage medium stores a computer program, and when the computer program is executed by a processor, the method for controlling a drive axle according to any one of the foregoing method embodiments is implemented.

This application further provides a system, a method, and/or a computer program product. The computer program product may include a computer-readable storage medium, and the computer-readable storage medium carries computer-readable program instructions that are used to enable a processor to implement various aspects of this application.

The computer-readable storage medium may be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital video disk (DVD), a memory stick, a floppy disk, a mechanical coding device such as a punch card or a groove protrusion structure storing instructions, and any suitable combination thereof. The computer-readable storage medium used herein is not explained as a transient signal, for example, a radio wave or another freely propagating electromagnetic wave, an electromagnetic wave propagating through a waveguide or another transmission medium (for example, a light pulse through an optical fiber cable), or an electrical signal transmitted through a wire.

The computer-readable program instructions described herein may be downloaded from the computer-readable storage medium to each computing/processing device, or downloaded to an external computer or external storage device through a network, for example, the Internet, a local area network, a wide area network, and/or a wireless network. The network may include a copper transmission cable, optical fiber transmission, wireless transmission, a router, a firewall, a switch, a gateway computer, and/or an edge server. A network adapter card or network interface in each computing/processing device receives the computer-readable program instructions from the network, and forwards the computer-readable program instructions for storage in a computer-readable storage medium in each computing/processing device.

The computer program instructions used to perform operations in this application may be assembly instructions, instruction set architecture (ISA) instructions, machine instructions, machine-related instructions, microcode, firmware instructions, status setting data, or source code or target code written in any combination of one or more programming languages. The programming languages include an object-oriented programming language such as Smalltalk or C++, and a conventional procedural programming language such as a "C" language or a similar programming language. The computer-readable program instructions may be executed entirely on a user computer, may be executed partially on a user computer as an independent software package, may be executed partially on a user computer and partially on a remote computer, or may be executed entirely on a remote computer or a server. In a case in which a remote computer is involved, the remote computer may be connected to a user computer via any type of network, including a local area network (LAN) or a wide area network (WAN), or may be connected to an external computer (for example, through the Internet provided by an Internet service provider). In some embodiments, an electronic circuit, for example, a programmable logic circuit, a field programmable gate array (FPGA), or a programmable logic array (PLA), is customized based on state information of the computer-readable program instructions. The electronic circuit may execute the computer-readable program instructions, to implement the various aspects of this application.

The various aspects of this application are described herein with reference to the flowcharts and/or block diagrams of the method, the apparatus (system), and the computer program product according to embodiments of this application. It will be understood that each block in the flowcharts and/or block diagrams and a combination of blocks in the flowcharts and/or block diagrams may be implemented by the computer-readable program instructions.

These computer-readable program instructions may be provided for a processor of a general-purpose computer, a dedicated computer, or another programmable data processing apparatus to produce a machine, so that, when executed by the processor of the computer or another programmable data processing apparatus, these instructions create an apparatus for implementing a function/action specified in one or more blocks in the flowcharts and/or block diagrams. These computer-readable program instructions may alternatively be stored in the computer-readable storage medium. These instructions enable a computer, a programmable data processing apparatus, and/or another device to operate in a specific way. Therefore, a computer-readable medium storing the instructions includes an artifact that includes instructions for implementing various aspects of functions/actions specified in the one or more blocks in the flowcharts and/or block diagrams.

The computer-readable program instructions may alternatively be loaded onto a computer, another programmable data processing apparatus, or another device, so that a series of operation steps is performed on the computer, another programmable data processing apparatus, or another device to produce a computer-implemented process. Therefore, the instructions executed on the computer, another programmable data processing apparatus, or another device implements functions/actions specified in the one or more blocks in the flowcharts and/or block diagrams.

The flowcharts and block diagrams in the accompanying drawings show possible implementations of system architectures, functions, and operations of systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, or sometimes may be executed in a reverse order, depending on a function involved. It will also be noted that each block in the block diagrams and/or flowcharts, and a combination of blocks in the block diagrams and/or flowcharts may be implemented by a dedicated hardware-based system that performs a specified function or action, or may be implemented by a combination of dedicated hardware and computer instructions. It is well known to a person skilled in the art that implementation by hardware, implementation by software, and implementation by a combination of software and hardware are all equivalent.

The foregoing has described embodiments of this application. The foregoing descriptions are examples, are not exhaustive, and are not limited to the disclosed embodiments. Many modifications and changes are clear to a person of ordinary skill in the art without departing from the scope and spirit of the described embodiments. Selection of terms used in this specification is intended to best describe the principles of embodiments, actual application, or technical improvements to technologies in the market, or to enable another person of ordinary skill in the art to understand embodiments disclosed in this specification. The scope of this application is defined in the appended claims.

## Claims

1. A method for controlling a drive axle, wherein the drive axle comprises a gear shift apparatus and a differential lock, the gear shift apparatus comprises at least two gears, and the method comprises:
obtaining a current driving mode of a vehicle; and
determining target gear information of the gear shift apparatus and target state information of the differential lock based on the current driving mode, wherein different driving modes correspond to different gear information and different state information.

2. The method according to claim 1, wherein after a step of determining the target gear information of the gear shift apparatus and the target state information of the differential lock based on the current driving mode, the method further comprises:
controlling the gear shift apparatus based on the target gear information; and
controlling the differential lock based on the target state information.

3. The method according to claim 2, wherein a step of controlling the gear shift apparatus based on the target gear information comprises:
when obtained gear shift evaluation information meets a gear shift condition, controlling a gear of the gear shift apparatus to be shifted to a gear corresponding to the target gear information.

4. The method according to claim 3, wherein a step in which the obtained gear shift evaluation information meets the gear shift condition comprises:
when current gear information is different from the target gear information, first apparatus fault information indicates that the gear shift apparatus is not faulty, and current vehicle speed information is less than or equal to a first vehicle speed threshold corresponding to the target gear information, determining that the gear shift evaluation information meets the gear shift condition, wherein the gear shift evaluation information comprises the current gear information, the first apparatus fault information, and the current vehicle speed information.

5. The method according to any one of claims 2 to 4, wherein a step of controlling the differential lock based on the target state information comprises:
when obtained state evaluation information meets a state switching condition, controlling a state of the differential lock to be switched to a state corresponding to the target state information.

6. The method according to claim 5, wherein a step in which the obtained gear shift evaluation information meets the gear shift condition comprises:
when current state information is different from the target state information, second apparatus fault information indicates that the differential lock is not faulty, the current vehicle speed information is less than or equal to a second vehicle speed threshold corresponding to locked state information of the differential lock, and current wheel speed difference information of two wheels connected to the drive axle is less than or equal to a wheel speed difference threshold corresponding to the locked state information of the differential lock, determining that the state evaluation information meets the state switching condition, wherein the state evaluation information comprises the current state information, the second apparatus fault information, the current vehicle speed information, and the current wheel speed difference information.

7. The method according to any one of claims 1 to 6, wherein the method further comprises:
when receiving gear shift information that is input by a user, controlling the gear shift apparatus based on the gear shift information.

8. The method according to claim 7, wherein a step of controlling the gear shift apparatus based on the gear shift information comprises:
when the obtained gear shift evaluation information meets the gear shift condition, controlling the gear of the gear shift apparatus to be shifted to a gear corresponding to the gear shift information; and
the method further comprises:
outputting first reminder information when the obtained gear shift evaluation information does not meet the gear shift condition.

9. The method according to any one of claims 1 to 8, wherein the method further comprises:
when receiving state switching information that is input by the user, controlling the differential lock based on the state switching information.

10. The method according to claim 9, wherein a step of controlling the differential lock based on the state switching information comprises:
when the obtained state evaluation information meets the state switching condition, controlling the state of the differential lock to be switched to a state corresponding to the state switching information; and
the method further comprises:
outputting second reminder information when the obtained state evaluation information does not meet the state switching condition.

11. A vehicle controller, comprising a memory and a processor, wherein the memory is configured to store computer instructions, and the processor is configured to invoke the computer instructions from the memory, to perform the method for controlling a drive axle according to any one of claims 1 to 10.

12. A first drive axle assembly, comprising a drive axle and the vehicle controller according to claim 11, wherein the drive axle comprises a gear shift apparatus and a differential lock, and the vehicle controller controls the gear shift apparatus and the differential lock.

13. A four-wheel drive powertrain, comprising the first drive axle assembly according to claim 12 and a second drive axle assembly, wherein
when a vehicle is in a target driving mode, a gear shift apparatus of the first drive axle assembly is in a neutral state, and the second drive axle assembly is in a driving state.

14. A vehicle, wherein the vehicle comprises the vehicle controller according to claim 11;
the vehicle comprises the first drive axle assembly according to claim 12; or
the vehicle comprises the four-wheel drive powertrain according to claim 13.

15. A computer-readable storage medium, wherein the computer-readable storage medium stores a computer program, and when the computer program is executed by a processor, the control method for a rear axle power system of a vehicle according to any one of claims 1 to 10 is implemented.
